# EUROPÄISCHE PATENTSCHRIFT

(11) **EP 0 335 191 B1**
(45) Veröffentlichungstag und Bekanntmachung des Hinweises auf die Patenterteilung: **19.05.1993**
(21) Anmeldenummer: 89104692.2
(22) Anmeldetag: 16.03.1989
(51) Int. Cl.: C08J 9/16, C08J 3/20, C08K 5/09, C08K 3/24, C08L 25/06

(54) **Treibmittel-Masterbatch für die Herstellung von Polystyrolschaumstoffen**
Blowing master batch for the preparation of polystyrene foams
Mélange maître gonflant pour la fabrication de mousses de polystyrène

(30) Priorität: 26.03.1988 DE 3810342
(43) Veröffentlichungstag der Anmeldung: 04.10.1989
(73) Patentinhaber: BASF Aktiengesellschaft, 67063 Ludwigshafen (DE)
(72) Erfinder: Kress, Gerhard, Dr., D-6700 Ludwigshafen (DE)

(56) Entgegenhaltungen:
- WO-A-86/06328
- DE-A- 1 504 711
- CHEMICAL ABSTRACTS, Band 107, 1987, Seite 63, Zusammenfassung Nr. 135564k, Columbus, Ohio, US
- CHEMICAL ABSTRACTS, Band 82, Nr. 11, 2. Juni 1975, Seite 49, Zusammenfassung Nr. 141140a, Columbus, Ohio, US

## Beschreibung

Für die Herstellung von feinzelligen Polystyrolschaumstoffen, insbesondere in Form von Folien, verwendet man als Treibmittel bevorzugt ein Gemisch aus festen organischen Säuren und Alkalimetall(bi)carbonaten, das unter den Verarbeitungsbedingungen Kohlendioxid freisetzt. Das gleichmäßige Einmischen des Treibmittels in die Polystyrolschmelze bereitet jedoch beträchtliche Schwierigkeiten.

Es hat daher nicht an Versuchen gefehlt, zunächst ein Vorgemisch (Masterbatch) aus Thermoplast und Treibmittel herzustellen, in dem das Treibmittel gleichmäßig verteilt ist, und dieses Vorgemisch anschließend unter Zusatz von Polystyrol zu Schaumstoffen zu extrudieren. Dabei ergab sich, daß es nicht gelingt, Polystyrol ohne Aufschäumen mit dem Treibmittel zu vermischen, da das Treibmittel sich bei der Aufschmelztemperatur des Polystyrols zersetzt. Verwendet man als Basismaterial des Treibmittelbatches anstelle von Polystyrol einen anderen niedrigschmelzenden Thermoplasten, so kann wegen der mangelnden Verträglichkeit solcher Thermoplaste mit Polystyrol kein gleichmäßiger Schaumstoff hergestellt werden.

Aufgabe der Erfindung war es daher, für die Herstellung von Polystyrolschaumstoffen einen Masterbatch zu entwickeln, der Treibmittel auf Basis von festen organischen Säuren und Alkalimetall(bi)carbonaten enthält, der ohne Zersetzung des Treibmittels hergestellt werden kann und dessen Basispolymeres mit Polystyrol verträglich ist.

Die Aufgabe wird gelöst durch die Verwendung eines weichmacherhaltigen Polystyrols mit einer Vicat-Erweichungstemperatur zwischen 30° und 50°C.

Gegenstand der Erfindung ist somit ein Treibmittelmasterbatch für die Herstellung von Polystyrolschaumstoffen, enthaltend
(a) 30 bis 80 Gew.-% weichmacherhaltiges Polystyrol mit einer Vicat-Erweichungstemperatur zwischen 30 und 50°C,
(b) 20 bis 70 Gew.-% Treibmittel auf Basis von festen organischen Säuren und Alkali(bi)carbonaten, sowie gegebenenfalls
(c) 10 bis 20 Gew.-% Porenregler.

Die Verwendung des neuen Treibmittel-Masterbatches bringt bei der Schaumstoffherstellung eine Vielzahl von Vorteilen: Es genügt ein einfaches Vermischen mit dem Polystyrol auch mit langsam laufendem Mischer bzw. die direkte Zugabe in den Extruder mit einem üblichen Dosiergerät. Der Wirkstoff wird im Polystyrol sehr homogen verteilt. Der Schaumstoff zeigt eine äußerst gleichmäßige Zellstruktur. Verkrustungen im Dosierzylinder und an den Schnecken des Extruders werden verhindert; dadurch lassen sich die Ausfallzeiten reduzieren und die Extruderlaufzeiten verlängern sich.

Wesentlicher Bestandteil des Masterbatches ist weichmacherhaltiges Polystyrol mit einer Vicat-Erweichungstemperatur (DIN 53 460, VST A) zwischen 30 und 50°C. Als Polystyrol können sämtliche handelsüblichen Styrolpolymerisate verwendet werden wie Styrolhomopolymerisat und Copolymere, die mindestens 50 Gew.-% einpolymerisiertes Styrol enthalten. Auch schlagzähes Polystyrol mit Kautschukanteilen ist verwendbar. Entscheidend ist, daß durch Zusatz eines üblichen Weichmachers, wie Paraffinöl, Silikonöl, mittel- bis langkettigen Alkylestern der Phthalsäure oder Isophthalsäure oder Polypropylenoxid die Vicat-Erweichungstemperatur des Polystyrol auf 30 bis 50°C herabgesetzt worden ist. Die optimale Menge an Weichmacher liegt im allgemeinen im Bereich zwischen 20 und 100, vorzugsweise 30 bis 85 Gew.-%, bezogen auf Polystyrol und kann durch einfache Vorversuche leicht ermittelt werden. Der Masterbatch enhält 30 bis 80 Gew.-%, vorzugsweise 40 bis 70 Gew.-% des weichmacherhaltigen Polystyrols.

Als Treibmittel wird ein Gemisch aus einer festen organischen Säure, beispielsweise Oxalsäure, Bernsteinsäure, Adipinsäure, Phthalsäure oder vorzugsweise Zitronensäure, und einem Alkalimetallcarbonat oder -bicarbonat, beispielsweise Natriumcarbonat, Kaliumcarbonat oder vorzugsweise Natriumbicarbonat, verwendet. Säure und Carbonat bzw. Bicarbonat werden im allgemeinen in etwa stöchiometrischen Mengen eingesetzt, d.h. pro Säureäquivalent etwa 0,9 bis 1,1 Alkaliäquivalent. Der Batch enthält 20 bis 70 Gew.-% des Treibmittels, vorzugsweise 30 bis 60 Gew.-%.

Daneben kann der Masterbatch noch 10 bis 20 Gew.-% eines üblichen Porenreglers, wie Talkum, Kaolin, Kieselgel und dergleichen enthalten.

Falls gewünscht, können dem Masterbatch auch weitere übliche Zusatzstoffe, wie Farbstoffe, Pigmente, Gleitmittel, Flammschutzmittel, Antistatika, in üblichen Mengen zugesetzt werden.

Die Herstellung des Masterbatches erfolgt durch inniges Vermischen der Komponenten in der Schmelze des Polystyrols in einem üblichen Mischgerät, beispielsweise im Extruder, und Zerkleinern der Mischung, beispielsweise mittels Heißabschlag des Extrudats und anschließendes Kühlen. Um eine Zersetzung des Treibmittels zu vermeiden, ist es empfehlenswert, bei der Vermischung der Komponenten bei Temperaturen unterhalb der Zersetzungstemperatur des Treibmittels zu arbeiten, im allgemeinen bei Temperaturen unterhalb von 125°C.

Der Treibmittelmasterbatch wird verwendet für die Herstellung von Polystyrolschaumstoffen nach Verfahren, wie sie beispielsweise aus der US-Patentschrift 2,941,946 bekannt sind.

Die in den Beispielen genannten Teile sind Gewichtsteile.

### Beispiel 1

In einem Extruder werden kontinuierlich zugeführt
42 Teile Standard-Polystyrol (Viskositätszahl 74, Vicat-Erweichungstemperatur nach DIN 53 460, VST A 84°C)
18 Teile Paraffinöl als Weichmacher
20 Teile Zitronensäure
20 Teile Natriumbicarbonat.

Das Gemisch wird bei einer Temperatur von 110 bis 135°C aufgeschmolzen und homogenisiert, anschließend extrudiert und durch Heißabschlag zu Granulat zerkleinert und sofort gekühlt und getrocknet. Die Vicat-Erweichungstemperatur des weichmacherhaltigen Polystyrols beträgt 34°C (DIN 53 460, VST A).

Das Granulat ist praktisch porenfrei.

### Beispiel 2

Man arbeitet wie in Beispiel 1, verwendet jedoch folgende Mischung:
20 Teile Standard-Polystyrol (Viskositätszahl 74, Vicat-Erweichungstemperatur nach DIN 53 460 VST A 84°C)
20 Teile Paraffinöl als Weichmacher
20 Teile Zitronensäure
20 Teile Natriumbicarbonat
20 Teile Talkum als Porenregler.

Die Vicat-Erweichungstemperatur des weichmacherhaltigen Polystyrols beträgt 30°C. Das Granulat ist praktisch porenfrei.

## Patentansprüche

1. Treibmittel-Masterbatch für die Herstellung von Polystyrolschaumstoffen, enthaltend
(a) 30 bis 80 Gew.-% weichmacherhaltiges Polystyrol mit einer Vicat-Erweichungstemperatur zwischen 30° und 50°C
(b) 20 bis 70 Gew.-% Treibmittel auf Basis von festen organischen Säuren und Alkalimetall(bi)carbonaten, sowie gegebenenfalls
(c) 10 bis 20 Gew.-% Porenregler.

## Claims

1. A blowing agent masterbatch for the production of polystyrene foams, comprising
(a) from 30 to 80% by weight of plasticizer-containing polystyrene having a Vicat softening point of 30 to 50°C,
(b) from 20 to 70% by weight of a blowing agent based on solid organic acids and alkali metal (bi)carbonates, and, if desired,
(c) from 10 to 20% by weight of pore regulators.

## Revendications

1. Masterbatch de gonflant pour la fabrication de matières alvéolaires de polystyrène, contenant
a) 30 à 80 % en poids de polystyrène à teneur en plastifiant, d'une température de ramollissement selon Vicat comprise entre 30 degrés et 50 degrés C
b) 20 à 70 % en poids de gonflant à base d'acides organiques solides et de (bi)carbonates de métal alcalin, ainsi qu'éventuellement,
c) 10 à 20 % en poids de régulateur de pores.
